# FASCICULE DE BREVET EUROPEEN

(11) **EP 1 605 660 B1**
(45) Date de publication et mention de la délivrance du brevet: **06.12.2006**
(21) Numéro de dépôt: 04291363.2
(22) Date de dépôt: 01.06.2004
(51) Int. Cl.: H04L 29/06, H04L 12/28

(54) **Contrôle d'accès à un réseau d'un terminal source utilisant un tunnel en mode bloquant**
Netzzugangskontrolle für ein mit einem VPN-Tunnel verbundenes Endgerät
Network access control for a terminal connected to a VPN tunnel

(43) Date de publication de la demande: 14.12.2005
(73) Titulaire: FRANCE TELECOM, 75015 Paris (FR)
(72) Inventeur: Charles, Olivier, 75014 Paris (FR); Butti, Laurent, 92100 Boulogne Billancourt (FR); Veysset, Franck, 92130 Issy Les Moulineaux (FR)
(74) Mandataire: Bentz, Jean-Paul

(56) Documents cités:
- US-A1- 2003 204 744
- HAIDONG XIA ET AL: "Detecting and blocking unauthorized access in Wi-Fi networks" NETWORKING 2004. NETWORKING TECHNOLOGIES, SERVICES, AND PROTOCOLS; PERFORMANCE OF COMPUTER AND COMMUNICATION NETWORKS; MOBILE AND WIRELESS COMMUNICATIONS. THIRD INTERNATIONAL IFIP-TC6 NETWORKING CONFERENCE. PROCEEDINGS. (LECTURE NOTES IN COMPUT. SCI., mai 2004 (2004-05), pages 795-806, XP002306583 ISBN: 3-540-21959-5
- VAUGHAN-NICHOLS S J: "Securing your Wi-Fi Connection on the Road" WI-FI PLANET, [Online] 7 novembre 2003 (2003-11-07), XP002306584 Extrait de l'Internet: URL:www.wi-fiplanet.com/tutorials/article. php/3106011> [extrait le 2004-11-18]

## Description

L'invention concerne, de façon générale, les techniques d'accès à un réseau informatique.

Plus précisément, l'invention concerne un procédé de contrôle d'accès d'un terminal source à un réseau comportant un point d'accès pour ce terminal, un pare-feu relié au point d'accès, et un portail d'authentification servi par une base de données d'authentification, ce portail plaçant le pare-feu dans un état d'autorisation d'accès en réponse à une requête initiale d'accès en mode de base émanant du terminal source et incluant la fourniture au portail ou au pare-feu de données d'authentification valides, à défaut desquelles le pare-feu est placé dans un état d'interdiction d'accès, le pare-feu restant dans un état d'autorisation d'accès en mode de base en réponse à la fourniture périodique, par le terminal source et sur un canal sécurisé d'échange de jeton, d'un jeton d'authentification valide à défaut duquel le pare-feu est placé dans son état d'interdiction d'accès, et le terminal source communiquant sélectivement en mode tunnel avec un terminal de destination du réseau à travers un tunnel bloquant.

Le contrôle d'accès à un réseau est la procédure par laquelle l'opérateur d'un réseau autorise ou n'autorise pas un usager potentiel à utiliser son réseau.

Or il existe des situations dans lesquelles il n'est, pour l'heure, plus possible à l'opérateur de maintenir le contrôle d'accès à son réseau parce que l'usager choisit d'utiliser un tunnel en mode bloquant, ce qui rend impossibles les communications entre l'usager et l'opérateur du réseau.

Pour des raisons fonctionnelles ou des raisons de sécurité, l'usager d'un réseau peut en effet être amené à établir un tunnel vers un hôte distant, tunnel au sein duquel il encapsule son trafic. Selon la configuration et les logiciels utilisés, ce tunnel peut être en mode bloquant, c'est-à-dire rejeter toutes les communications qui n'emprunteraient pas ce tunnel dans le sens de la réception comme dans le sens de l'émission.

Ce mode bloquant constitue en fait une garantie de sécurité supplémentaire pour l'usager. En effet, dans le cas où un usager se connecte via un tunnel au réseau privé ou "intranet" de son entreprise, un pirate ne peut pas attaquer la machine de cet usager pour l'utiliser comme relais afin d'accéder à l'intranet de l'entreprise de ce dernier.

L'intérêt et les modalités d'une telle protection sont notamment décrits dans l'article de HAIDONG XIA & al : "Detecting and blocking unauthorized access in Wi-Fi networks" NETWORKING 2004. NETWORKING TECHNOLOGIES, SERVICES AND PROTOCOLS. THIRD INTERNATIONAL IFIP-TC6 NETWORKING CONFERENCE (LECTURE NOTES IN COMPUT. SCI., mai 2004, pages 795-806, ISBN : 3-540-21959-5).

Dans ce contexte, l'invention a pour but de proposer un procédé qui permet à l'opérateur d'un réseau de maintenir le contrôle d'accès à son réseau, même dans le cas où un usager choisit d'utiliser un tunnel en mode bloquant.

A cette fin, le procédé de l'invention, par ailleurs conforme à la définition générique qu'en donne le préambule ci-dessus, est essentiellement caractérisé en ce qu'au moins la fourniture périodique du jeton d'authentification est réalisée par une transmission sur la couche de niveau 2 du modèle OSI du canal d'échange de jeton établi entre le terminal source et le pare-feu, ce dont il résulte que la fourniture périodique du jeton d'authentification continue à être assurée lors d'une communication en mode tunnel bloquant.

Par exemple, le procédé de l'invention comprend, postérieurement à une opération initiale réussie d'authentification du terminal source, au moins une opération d'élaboration d'un secret mise en oeuvre sur le terminal source et / ou sur le portail captif par l'un au moins de programmes d'application respectifs, et des opérations de retransmission de ce secret à des entités d'authentification correspondantes du terminal source et du pare-feu.

Par convention, le terme de "secret" tel qu'utilisé dans la présente description sera compris comme couvrant non seulement, au sens propre, un secret particulier, bien défini et directement utilisable, mais également tous les éléments permettant de dériver ou de reconstruire un tel secret au sens propre.

Le secret peut avantageusement être transmis du portail captif au terminal source dans une fenêtre d'authentification.

Dans ce cas, notamment, la fenêtre d'authentification peut également assurer la transmission, du portail captif vers le terminal source, d'un compteur initialisé à la fois du côté du terminal source et du portail captif.

En outre, la fenêtre d'authentification peut avantageusement comporter un bouton de déconnexion.

Postérieurement à une opération initiale réussie d'authentification du terminal source, le jeton d'authentification est par exemple périodiquement fourni par l'entité d'authentification du terminal source à destination de l'entité d'authentification du pare-feu, qui vérifie ce jeton.

De même, postérieurement à une opération initiale réussie d'authentification du terminal source, le compteur est de préférence périodiquement fourni par l'entité d'authentification du terminal source à destination de l'entité d'authentification du pare-feu, qui vérifie ce compteur.

Après vérification de données fournies par l'entité d'authentification du terminal source, l'entité d'authentification du pare-feu peut ainsi placer un module de filtrage du pare-feu dans un état d'autorisation ou d'interdiction d'accès, en fonction du résultat de cette vérification.

L'entité d'authentification du terminal source est par exemple réalisée en langage Java, téléchargée lors de l'authentification initiale de ce terminal source, et exécutée dans la fenêtre de maintien de session.

Par ailleurs, la transmission de niveau 2 établie entre les entités d'authentification du terminal source et du pare-feu est avantageusement développée selon une extension du protocole ARP.

L'invention concerne également un premier programme d'ordinateur destiné à être implanté sur un terminal source et conçu pour autoriser conditionnellement une connexion de ce terminal source en mode tunnel bloquant avec un terminal de destination d'un réseau à travers un pare-feu contrôlé par un portail captif du réseau, ce premier programme étant caractérisé en ce qu'il comprend un module d'initialisation propre à récupérer un secret partagé en provenance du portail et à initialiser un compteur, un module de confirmation périodique d'authentification appelé par le module d'initialisation et propre à élaborer et à émettre à destination du pare-feu, et sur la couche 2 du modèle OSI, un authentifiant unique dépendant au moins du secret partagé et du contenu du compteur, et un module de mise à jour et de décision appelé par le module de confirmation périodique d'authentification et propre à incrémenter le compteur, à mettre fin à la connexion en cas d'anomalie de communication avec le pare-feu, et à appeler à nouveau le module de confirmation périodique d'authentification dans le cas contraire, ce dont il résulte que le terminal source continue à être authentifié par le pare-feu pendant la connexion en mode tunnel bloquant.

L'invention concerne également un deuxième programme d'ordinateur destiné à être implanté sur un pare-feu installé dans un réseau, et contrôlé par un portail captif du réseau, pour autoriser conditionnellement une connexion en mode tunnel bloquant entre un terminal source et un terminal de destination de ce réseau à travers le pare-feu, ce deuxième programme étant caractérisé en ce qu'il comprend un module d'écoute du réseau, un module de sélection, et un module d'analyse et de décision, en ce que le module d'écoute du réseau est propre, en réponse à une demande d'authentification reçue du terminal source, à récupérer un secret partagé en provenance de ce terminal source, en ce que le module de sélection est appelé par le module d'écoute et propre à repérer, dans un flux de trames circulant sur la couche 2 du modèle OSI, des trames d'authentification du terminal source, et à aiguiller les trames d'authentification vers le module d'analyse et de décision, et en ce que le module d'analyse et de décision vérifie le contenu des trames d'authentification, met fin à la connexion du terminal source en cas d'anomalie, et met à jour les règles d'autorisation de connexion utilisées par le pare-feu dans le cas contraire.

L'invention concerne également un système pour contrôler l'accès d'un terminal source à un réseau informatique, comprenant un pare-feu placé entre ledit réseau informatique et un point d'accès pour ledit terminal source, et un portail d'authentification pilotant l'état dudit pare-feu, dans lequel le pare-feu est apte à maintenir un canal de communication sécurisé ouvert pour le terminal source à condition que le terminal source envoie périodiquement ou sur évènement un jeton d'authentification, ce système étant caractérisé en ce que:
- le pare-feu comprend un module de protocole d'authentification et un module de filtrage, ledit module de protocole d'authentification étant apte à rendre "passant" ou "bloquant" ledit module de filtrage pour les communications entre le terminal source et le réseau informatique selon que le terminal source est authentifié ou non,
- le portail d'authentification comprend un programme d'application apte à distribuer des secrets au module de protocole d'authentification lorsque l'authentification initiale du terminal source sur le réseau informatique a réussi,
- le terminal source comprend un module de protocole d'authentification et un programme d'application, ledit programme d'application étant apte à distribuer des secrets audit module de protocole d'authentification lorsque l'authentification initiale du terminal source sur le réseau informatique a réussi,
et en ce que le module de protocole d'authentification est apte à envoyer lesdits jetons d'authentification au module de protocole d'authentification via la couche 2 du modèle OSI.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement les moyens fonctionnels nécessaires à la mise en oeuvre de l'invention;
- la figure 2 représente les flux d'informations mis en oeuvre entre le terminal source, le pare-feu et le portail d'authentification, à partir de la procédure d'authentification du terminal source; et
- la figure 3 représente les flux d'informations mis en oeuvre entre le terminal source, le pare-feu et le portail d'authentification, pendant l'utilisation du tunnel en mode bloquant; et
- les figures 4A et 4B sont des organigrammes représentant respectivement le programme d'ordinateur mis en oeuvre sur le terminal source, et le programme d'ordinateur mis en oeuvre sur le pare-feu.

Compte tenu de la nécessité, pour décrire dans le détail le procédé de l'invention d'une manière compréhensible pour l'homme du métier, d'utiliser le vocabulaire standard de ce dernier, le lecteur peu familier du domaine concerné trouvera ci-après les définitions et références utiles à sa propre compréhension de la description.

### I. DEFINITIONS.

Adresse IP : Adresse d'un équipement utilisant IP (voir ce mot) comme protocole de couche 3 du modèle OSI (voir ce mot).
Adresse MAC : Adresse d'un équipement connecté à un médium partagé utilisé par la couche 2 du modèle OSI (voir ce mot).
ARP (Acronyme tiré de l'anglais "Address Resolution Protocol") : Protocole de résolution des adresses IP en adresses MAC, de niveau 2 du modèle OSI (voir ce mot), permettant de faire communiquer des stations sur un réseau à base Ethernet. Les communications réelles sont en effet basées sur les adresses MAC de la source et du destinataire.
DHCP (Acronyme tiré de l'anglais "Dynamic Host Configuration Protocol") : Protocole d'attribution dynamique des adresses sur un réseau IP (voir ce mot).
DNS (Acronyme tiré de l'anglais "Domain Name Server" ou "Domain Name System") : Service essentiel de l'Internet assurant la conversion des noms de domaines en adresses IP (voir ce mot).
Fonction de hachage : cette expression désigne une fonction qui convertit une chaîne de caractères de longueur quelconque en une chaîne de caractères de taille fixe de taille inférieure, cette chaîne est appelée empreinte (hash). Le résultat d'une fonction de hachage est le même pour la même chaîne d'entrée, mais en principe il n'existe pas deux résultats semblables de fonction de hachage.
Fonction de hachage à clef : cette expression désigne une fonction de hachage qui, en plus d'une chaîne de caractères de longueur quelconque, prend en entrée une clef secrète.
HMAC-MD5 (Acronyme tiré de l'anglais "Keyed-Hashing for Message Authentification" - "Message Digest 5") : Algorithme cryptographique du type "fonction à hachage à clef" (voir cette expression).
HMAC-SHA1 (Acronyme tiré de l'anglais "Keyed-Hashing for Message Authentification" - "Secure Hash Algorithm") : Algorithme cryptographique du type "fonction à hachage à clef" (voir cette expression).
HTML (Acronyme tiré de l'anglais "HyperText Markup Language") : Format de document Internet défini par la Norme RFC 1866.
HTTPS (Acronyme tiré de l'anglais "HyperText Transfer Protocole Secure") : Protocole de transmission issu du navigateur "Netscape" et lié à une connexion sécurisée.
IP (Acronyme tiré de l'anglais "Internet Protocol") : Protocole de niveau réseau utilisé dans l'Internet orienté sans connexion (principe du datagramme).
IPsec (Acronyme tiré de l'anglais "Internet Protocol Security") : Protocole de sécurité utilisé dans l'Internet.
MAC (Acronyme tiré de l'anglais "Medium Access Control") : Terme général désignant la couche qui gère le partage d'un support de transmission entre différentes stations.
Open Source (Expression anglaise) : Logiciel libre répondant à des exigences qualitatives définies.
OSI (Acronyme tiré de l'anglais "Open System Interconnection") : Modèle d'interconnexion des systèmes ouverts où l'ensemble des actions permettant de faire coopérer plusieurs équipements informatiques est structuré en couches correspondant à des niveaux de détails différents.
SSL (Acronyme tiré de l'anglais "Secure Socket Layer") : Norme de mode de communication sécurisée sur réseau, initialement utilisée par le navigateur de marque "Netscape", puis officialisée.
TCP (Acronyme tiré de l'anglais "Transport Control Protocol") : Protocole de transport orienté connexion, permettant un échange fiable d'une quantité quelconque de données entre deux équipements (niveau 4 OSI - voir ce mot) reliés par un ou plusieurs réseaux utilisant IP (voir ce mot).
TLS (Acronyme tiré de l'anglais "Transport Layer Security") : Protocole de sécurisation de la couche transport, défini par la norme RFC 2246. La version 1.0 de TLS est eh fait la version 3 de SSL (voir ce mot).
UDP (Acronyme tiré de l'anglais "User Datagram Protocol") : Protocole de transport de blocs de données indépendants, ou "paquets", transitant sur un réseau et contenant toutes les informations nécessaires à leur routage.
URL (Acronyme tiré de l'anglais "Uniform Resource Locator") : Format d'adresse permettant de retrouver une ressource.
VPN (Acronyme tiré de l'anglais "Virtual Private Network") : Réseau privé virtuel.

### II. RÉFÉRENCES.

[ARP] Address Resolution Protocol, "An Ethernet Address Resolution Protocol", RFC 826, November 1982.
[HMAC-MD5] Krawczyk H., Bellare M., and Canetti R., "HMAC : Keyed-Hashing for Message Authentification", RFC 2104, February 1997.
[IEEE-802.1X-2001] Institute of Electrical and Electronics Engineers, "Local and Metropolitan Area Networks: Port-Based Network Access Control", IEEE Standard 802.1X, Septembre 2001.
[IEEE 802.3-2002] IEEE Standard for Information technology - Telecommunications and information exchange between systems - Local and metropolitan area networks - Specific requirements - Part 3: Carrier Sense Multiple Access with Collision Detection (CSMA/CD) Access Method and Physical Layer Specifications.
[IEEE-802.11-1997] Institute of Electrical and Electronics Engineers, "Information Technology - Telecommunications and Information Exchange between Systems - Local and Metropolitan Area Network -Specific Requirements - Part 11: Wireless LAN Medium Access Control (MAC) and Physical Layer (PHY) Specifications", IEEE Standard 802.11, 1997.
[IEEE-802.11-1999] Institute of Electrical and Electronics Engineers, "Information Technology - Telecommunications and Information Exchange between Systems - Local and Metropolitan Area Network - Specifie Requirements - Part Il: Wireless LAN Medium Access Control (MAC) and Physical Layer (PHY) Specifications", IEEE Standard 802.11, 1999.
[IEEE-802.11i] Institute of Electrical and Electronics Engineers, "Unapproved Draft Supplement to Standard for Telecommunications and Information Exchange Between Systems - LAN/MAN Specifie Requirements - Part Il: Wireless LAN Medium Access Control (MAC) and Physical Layer (PHY) Specifications: Specification for Enhanced Security", IEEE Draft 802.11i (work in progress), 2003.
[IPsec] Kent, S., and R. Atkinson, "Security Architecture for the Internet Protocol", RFC 2401, Novembre 1998.
[OSI] International Organization for Standardization, "Open Systems Interconnexion", ISO 7498.
[TLS] Dierks, T. and Allen, c., "The TLS Protocol version 1.0", RFC 2246, Janvier 1999.
[WPA] Wi-Fi protected Access, Wi-Fi Alliance, version 1.2, Decembre 2002.

Le procédé décrit ci-après s'applique typiquement à un scénario dans lequel l'opérateur du réseau réalise un contrôle d'accès au niveau TCP/IP et dans lequel l'usager souhaite utiliser un tunnel tel que [IPsec] en mode bloquant.

L'invention peut trouver un usage pertinent dans les réseaux radioélectriques IEEE 802.11 ([IEEE-802.11-1997] et [IEEE-802.11-1999]) de «première génération», c'est à dire qui ne mettent pas en oeuvre les nouvelles fonctionnalités de sécurité au niveau 2 du modèle [OSI] comme WPA ou 802.11i., et dans les réseaux filaires IEEE 802.3 ([IEEE 802.3-2002]) et Ethernet qui réalisent un contrôle d'accès selon le paradigme de «portail captif».

### III. ETAT DE LA TECHNIQUE ANTERIEURE

Un préliminaire au contrôle d'accès est l'authentification. L'authentification permet à l'opérateur du réseau de déterminer avec certitude l'identité de l'usager qui cherche à utiliser son réseau.

Pour authentifier un usager, l'opérateur d'un réseau doit dialoguer avec ce dernier.

En cas d'authentification réussie, l'opérateur du réseau décide en fonction de l'identité de l'usager si ce dernier est autorisé ou non à accéder au réseau.

Afin d'éviter que des usagers illégitimes ne profitent indûment du réseau, il est nécessaire pour le contrôle d'accès :
- de s'assurer que seuls les usagers que l'opérateur a autorisés peuvent utiliser le réseau, c'est-à-dire d'éviter qu'un usager non-autorisé ne puisse utiliser le réseau; et
- de maintenir la relation d'authentification avec l'usager, c'est-à-dire de s'assurer que l'usager autorisé qui utilise le réseau est bien le même que celui qui s'est authentifié, afin d'éviter qu'un usager non-autorisé usurpe l'identité d'un usager autorisé.

Plusieurs techniques permettent de réaliser un contrôle d'accès au réseau, en particulier :
- des techniques physiques : par exemple les prises permettant d'accéder au réseau sont situées dans des locaux fermés à clefs; et
- des techniques logiques : par exemple l'accès au réseau est conditionné par la possession d'un secret permettant d'employer des techniques cryptographiques.

En l'absence de mécanismes de sécurité incluant le contrôle d'accès au niveau 2 (lien de données) du modèle à sept couches de 1'[OSI] ou du fait des coûts liés au déploiement de tels mécanismes quand ils existent et du très faible taux de pénétration de ces derniers dans le parc d'équipement des usagers, le paradigme du «portail captif» a été développé.

Ce paradigme permet de réaliser un contrôle d'accès aux réseaux TCP/IP :
- en réalisant un filtrage sur les adresses MAC et IP; et
- en utilisant des jetons d'authentification échangés entre le terminal source et le portail d'authentification.

Lors de sa connexion au réseau, l'usager est invité à ouvrir son navigateur Internet, et sa première requête à l'aide de ce dernier est automatiquement redirigée vers le portail d'authentification de l'opérateur (d'où le nom de portail captif). Ce portail captif permet à l'usager de s'authentifier de manière sécurisée, par exemple en utilisant les protocoles SSL/[TLS].

Toutes les autres requêtes de l'usager non-authentifié sont bloquées par un pare-feu qui réalise un filtrage par adresse MAC et/ou adresse IP. En cas d'authentification réussie et dans le cas où l'usager authentifié est autorisé à accéder au réseau, le pare-feu est mis à jour pour laisser passer le trafic de cet usager.

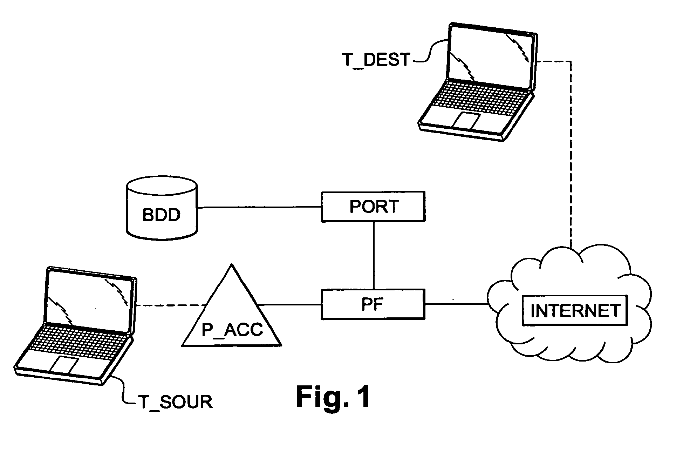

L'architecture d'un portail captif (figure 1), qui permet à un terminal source T_SOUR de communiquer en mode tunnel avec un terminal de destination T_DEST du réseau, implique ainsi globalement un point d'accès P_ACC, un pare-feu PF, le portail d'authentification lui-même PORT, et une base de données d'identification BDD.

Le point d'accès P_ACC offre au terminal source T_SOUR une voie de connexion filaire ou sans fil (Wi-Fi par exemple) au réseau Internet.

Le pare-feu PF contrôle directement l'accès du terminal T_SOUR au réseau Internet en filtrant les paquets (typiquement au niveau IP et TCP), et en opérant un filtrage par adresse MAC.

Le portail PORT authentifie l'usager, intercepte les requêtes des usagers non-authentifiés, redirige ces usagers vers une page d'authentification, fait vérifier ses données d'authentification par la base de données BDD, modifie les règles du pare-feu PF en fonction du résultat de cette vérification, et pilote donc l'état du pare-feu.

La base de données BDD contient quant à elle les données valides des usagers autorisés, et répond aux requêtes du portail PORT.

Comme le contrôle d'accès par adresse MAC et adresse IP est intrinsèquement faible (il est en effet très facile, par simple manipulation logicielle, d'usurper l'adresse MAC et l'adresse IP d'un usager), le portail captif PORT utilise un contrôle d'accès supplémentaire par jeton échangé entre le terminal source et le portail d'authentification.

Le portail captif garde en effet un canal de communication sécurisé ouvert avec l'usager, sur lequel l'usager doit présenter périodiquement, ou sur événement, un jeton d'authentification. Le défaut de présentation de ce jeton entraîne la réinitialisation du pare-feu dans l'état bloquant pour cet usager. Ainsi, un usager non-autorisé usurpant l'adresse MAC et/ou l'adresse IP d'un usager autorisé ne pourra pas présenter ce jeton et verra sa connexion terminée. Même si la présence simultanée d'un usager autorisé chargé de présenter le jeton et d'un usager non-autorisé usurpant l'adresse MAC et l'adresse IP de cet usager autorisé est envisageable, les mécanismes de fonctionnement des protocoles TCP/IP rendront les connexions inutilisables: l'usager non-autorisé, s'il veut profiter de la connexion de l'usager autorisé n'a, pour l'heure, pas d'autre choix que de faire taire l'usager autorisé, par exemple par du déni de service. Après avoir fait taire l'usager autorisé, l'usager non-autorisé ne peut profiter du service que tant que le portail captif n'exige pas la présentation du jeton, intervalle de temps qui peut être configuré au niveau du portail captif PORT.

Le paradigme de «portail captif» tel que décrit jusqu'à présent s'applique, par exemple, tant aux réseaux radioélectriques utilisant la technologie IEEE 802.11 qu'aux réseaux locaux filaires utilisant les technologies IEEE 802.3/Ethernet.

Dans le cas des réseaux radioélectriques utilisant la technologie IEEE 802.11, les mécanismes de sécurité prévus à l'origine dans la norme [IEEE802.11-1997] et [IEEE802.11-1999] ont rapidement révélé des problèmes majeurs qui rendent leur utilisation tout aussi compliquée qu'inefficace: c'est la faillite consommée en 2000 et 2001 des mécanismes de sécurité connus sous l'acronyme "WEP".

Bien que des mécanismes de sécurité plus robustes soient en cours de déploiement [WPA] ou de spécification [IEEE-802.11i], ils ne présentent pas à l'heure actuelle de maturité suffisante pour être déployés à grande échelle.

Deux scénarios dans lesquels le paradigme de «portail captif» s'applique aux réseaux radioélectriques utilisant la technologie IEEE 802.11 sont :
- les réseaux radioélectriques locaux, appelés "Hot-Spots", utilisant la technologie IEEE 802.11 et déployés dans des lieux très fréquentés, par exemple les réceptions d'hôtels ou les salles d'attente d'aéroport, où 1a mise à disposition d'une connexion à Internet présente une forte valeur ajoutée; et
- les accès à un réseau offerts par une entreprise à ses visiteurs pour permettre à ces derniers de travailler plus efficacement, par exemple dans les salles de réunion.

Dans le cas des réseaux locaux filaires utilisant les technologies IEEE 802.3/Ethernet, aucun mécanisme de sécurité n'a été prévu à l'origine. Ce n'est qu'en 2001, avec l'adoption de la norme [IEEE802.1X-2001], que des mécanismes de sécurité ont vu le jour pour ces réseaux.

Cependant leur taux de pénétration dans le parc des équipements usagers est encore faible. C'est pour cela qu'une entreprise souhaitant offrir un accès réseau à ses visiteurs, par exemple en salle de réunion, peut être amenée à utiliser le paradigme de «portail captif».

Le point faible de la technique connue de portail captif, qui renforce le contrôle d'accès par filtrage d'adresse IP et/ou adresse MAC par un échange de jeton d'authentification, réside justement dans le fait que cette technique suppose que l'opérateur et l'usager soient capables de dialoguer pour pouvoir s'échanger le jeton.

Or, l'application la plus typique utilisée par les usagers dans les scénarios présentés précédemment consiste pour ces usagers à monter un tunnel (créant ainsi un VPN) vers l'intranet de leur entreprise.

Pour des raisons de sécurité, la plupart des applications de VPN empêchent alors toutes les communications à destination ou en provenance de l'usager, autres que celles qui passent à l'intérieur du VPN. Il s'agit donc de tunnels en mode bloquant.

Dans ce cas, il n'est donc plus possible de maintenir l'échange du jeton d'authentification, et aucune solution n'est disponible à l'heure actuelle pour résoudre ce problème.

En conséquence :
- soit la sécurisation par échange de jeton est alors purement et simplement abandonnée dans le paradigme de «portail captif», auquel cas le contrôle d'accès au réseau ne consiste plus qu'en un filtrage par adresse IP et/ou adresse MAC, ce qui présente des vulnérabilités critiques,
- soit la sécurisation par échange de jeton est maintenue et l'usager ne peut pas monter un tunnel en mode bloquant, par exemple vers l'intranet de son entreprise, car la première demande d'échange de jeton postérieure à l'établissement du tunnel échouera et le trafic de l'usager sera bloqué.

### IV. PRINCIPE DE L'INVENTION

L'invention permet à l'opérateur d'un réseau de maintenir un contrôle d'accès efficace à son réseau, même dans le cas où l'usager choisit d'utiliser un tunnel en mode bloquant.

Cette invention propose un mode de ré-authentification périodique totalement invisible à l'usager. Par ailleurs, l'emploi d'un canal de transmission non affecté par le mode bloquant entre le terminal et le portail captif permet l'échange d'informations supplémentaires, comme par exemple des durées de connexion ou des volumes consommés.

L'invention repose sur l'observation du fait que la technique de mode bloquant utilisée par exemple par les usagers de IPsec a la propriété de filtrer les paquets de données au niveau 3 du modèle OSI.

Cette propriété, non publiée par les éditeurs de logiciels, a pour conséquence que l'utilisation d'un tunnel en mode bloquant ne peut pas s'affranchir des communications effectuées au niveau 2 du modèle OSI par le protocole impliqué, par exemple le protocole ARP.

L'invention met cette propriété à profit pour maintenir l'échange du jeton d'authentification, mais au niveau 2 du modèle OSI, et non aux niveaux 3 et supérieurs comme dans l'état actuel de la technique.

La modification ainsi apportée permet à la fois de garder le mode bloquant de l'usager IPsec, et d'utiliser un protocole d'authentification périodique fort.

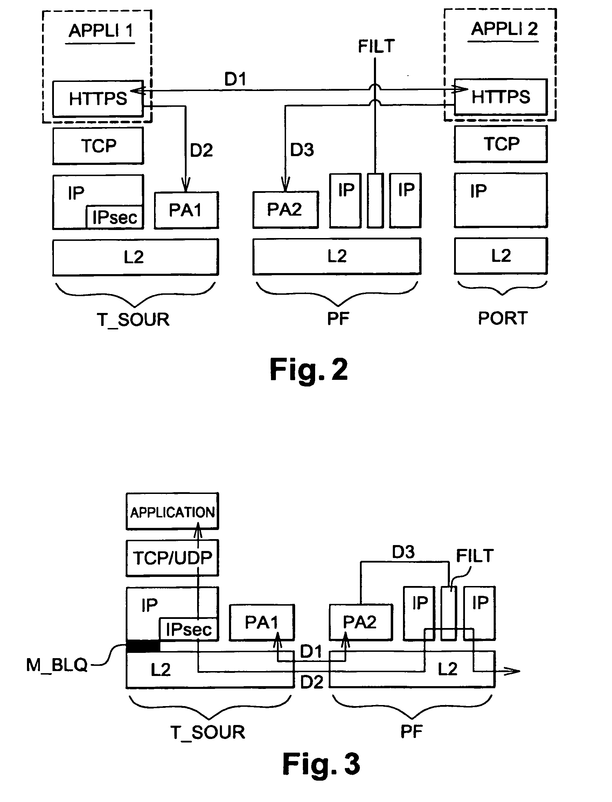

Pour ce faire, le contrôle de session, c'est-à-dire typiquement le mécanisme d'échange de jeton entre le terminal source T_SOUR et le portail PORT, est déplacé au niveau 2 du modèle OSI (L2 sur les figures 2 et 3), ce qui permet de le rendre indépendant de tout mode bloquant (M_BLQ sur la figure 3) éventuellement mis en place par l'usager du terminal T_SOUR sur des couches supérieures de ce modèle.

En effet, il n'est pas possible, pour l'usager d'un tunnel en mode bloquant, d'empêcher les communications de son terminal T_SOUR au niveau 2 du modèle OSI, dans la mesuré où ce terminal doit impérativement pouvoir dialoguer au niveau 2 avec les passerelles ou routeurs du réseau pour émettre des paquets de données vers l'extérieur, et en recevoir depuis l'extérieur, et où il se retrouverait donc totalement isolé du réseau si ce dialogue était interrompu.

Concrètement, l'invention utilise d'une part une entité (encore appelée "module") de protocole d'authentification PA1 et un programme d'application APPLI1 mis en oeuvre dans le terminal source T_SOUR, d'autre part une entité (ou "module") de protocole d'authentification PA2 et une fonction (encore appelée "module") de filtrage FILT mises en oeuvre dans le pare-feu PF, et enfin un programme d'application APPLI2 mis en oeuvre dans le portail captif PORT.

L'entité de protocole d'authentification PA1 mise en oeuvre dans le terminal T_SOUR doit pouvoir interagir (dialogue D2 sur la Figure 2) avec le programme d'application APPLI1 qui lui distribue des secrets lorsque l'authentification du terminal T_SOUR sur le réseau (dialogue D1 de la figure 2) a réussi.

L'entité de protocole d'authentification PA1 mise en oeuvre dans le terminal T_SOUR doit également être en relation directe avec la couche 2 (L2) du modèle OSI, par laquelle elle communique avec l'entité PA2 correspondante mise en oeuvre dans le pare-feu PF (dialogue D1 de la figure 3).

L'entité de protocole d'authentification PA2 mise en oeuvre dans le pare-feu PF doit pouvoir interagir (dialogue D3 sur la Figure 2) avec le programme d'application APPLI2 qui lui distribue des secrets lorsque l'authentification du terminal T_SOUR sur le réseau a réussi, et avec la fonction FILT de filtrage de paquets (dialogue D3 de 1a figure 3) pour la rendre "passante" lorsque l'authentification vérifiée par les entités PA1 et PA2 réussit et "bloquante" lorsque l'authentification vérifiée par les entités PA1 et PA2 échoue.

L'entité de protocole d'authentification PA2 mise en oeuvre dans le pare-feu PF doit également être en relation directe avec la couche 2 du modèle OSI, par laquelle elle communique avec l'entité PA1 correspondante mise en oeuvre dans le terminal source T_SOUR (dialogue D1 de la figure 3).

A moins d'une adaptation particulière qui sera discutée ultérieurement, le terminal T_SOUR et le pare-feu PF doivent être en vue directe sur la couche 2 du modèle OSI, c'est-à-dire exempts de tout routeur intermédiaire.

Chronologiquement, le procédé comprend une phase initiale d'authentification du terminal T_SOUR, et une phase ultérieure périodique de ré-authentification des entités PA1 et PA2.

Durant la phase d'authentification initiale, le terminal source T_SOUR, ou son usager, s'authentifie auprès du portail captif PORT en échangeant des données via le lien sécurisé symbolisé par le dialogue D1 de la figure 2, ce lien confidentiel pouvant être réalisé en TLS/SSL de manière classique.

Des secrets sont dérivés de cette authentification, symétriquement sur le terminal source T_SOUR et sur le portail captif PORT, par les programmes d'application respectifs APPLI1 et APPLI2, puis retransmis par ces derniers aux entités d'authentification correspondantes PA1 et PA2 (dialogues D2 et D3 de la figure 2).

Une fois que les entités PA1 et PA2 ont reçu les secrets permettant une reconnaissance mutuelle, elles mettent périodiquement en oeuvre le protocole de ré-authentification du terminal T_SOUR par le pare-feu PF (dialogue D1 de la figure 3).

Tant que cette ré-authentification réussit, le module de filtrage FILT du pare-feu PF est commandé par l'entité PA2 (dialogue D3 de la figure 3) pour rester passant pour les données du terminal T_SOUR (dialogue D2 de la figure 3), ce module de filtrage FILT étant, dans le cas contraire, commandé pour devenir bloquant.

Dans ces conditions, tant que le module de filtrage FILT est passant, le flux de données dans lequel le terminal T_SOUR est impliqué peut librement circuler. Si ce terminal choisit de passer en mode bloquant, par exemple en appelant IPsec avec certains types de logiciels, alors la ré-authentification entre les entités PA1 et PA2 peut continuer, le contrôle d'accès au niveau du pare-feu PF restant ainsi valide.

### V. DESCRIPTION D'UN MODE PARTICULIER DE REALISATION DE L'INVENTION.

Cette partie de la description explique comment le procédé de l'invention peut être mis en oeuvre dans un mécanisme connu de contrôle d'accès par «portail captif».

### A. Rappel du contexte actuel.

On présente ici le mode de fonctionnement classique d'une connexion d'un usager à un réseau supportant la technologie de «portail captif». Cette technologie est mise en oeuvre dans de nombreux produits commerciaux, et est disponible également dans un produit Open Source appelé NoCatAuth (notamment décrit sur le site http://nocat.net).

Cette solution de «portail captif» Open Source pilote plusieurs moteurs de filtrage Open Source comme "iptables", "packetfilter" ou "IPFilter", respectivement décrits sur les sites :
http://iptables.org, http://www.benzedrine.cx/pf.html, et http://www.ipfilter.org.

Il permet de piloter ces moteurs de filtrage grâce à un dialogue entre le portail captif et une application pilotant le moteur de filtrage.

Les étapes du processus standard de connexion sont les suivantes.
1. L'usager se connecte au réseau dont le contrôle d'accès est réalisé par le portail captif;
2. Le réseau lui permet de récupérer les informations de connectivité classique (adresse IP, adresses serveurs DNS, adresses passerelle par défaut...), ceci étant généralement effectué à l'aide d'échanges DHCP;
3. L'usager décide de s'authentifier auprès du réseau afin d'avoir accès aux services offerts par le site local (typiquement l'Internet);
4. L'usager envoie une requête vers l'Internet qui est interceptée par le moteur de filtrage (règles par défaut) et redirigée vers le «portail captif». Le «portail captif» présente alors la bannière d'authentification à l'usager;
5. L'usager entre ses données d'authentification (typiquement un nom d'utilisateur et un mot de passe) qui seront validées par le «portail captif»;
6. Le «portail captif» interagit avec le moteur de filtrage de manière à modifier les règles de filtrage par défaut pour cet usager. A ce moment-là, l'usager est alors capable de communiquer vers l'extérieur (typiquement l'Internet) en fonction des nouvelles règles de filtrage communiquées au moteur de filtrage;
7. Le «portail captif» pousse une fenêtre d'authentification périodique à l'usager, cette fenêtre permettant de maintenir la session entre l'usager et le portail captif grâce à la notion de jeton d'authentification, et étant donc encore ici appelée «fenêtre de maintien de session».

En pratique, la fenêtre de maintien de session peut être écrite en code HTML, permettant d'initier une connexion de manière périodique vers une URL bien formatée (contenant en particulier le jeton d'authentification).

### B. Mise en oeuvre de l'invention dans le contexte rappelé ci-dessus.

L'utilisation de la fenêtre maintien de session, qui est protégée par des mécanismes cryptographiques à base de SSL/TLS (https sur la figure 2), permet de dériver un secret qui est propre au terminal T_SOUR et au portail captif PORT. L'invention peut alors utiliser des mécanismes cryptographiques spécifiques afin d'assurer la confidentialité des informations transportées dans le nouveau protocole spécifié au niveau 2 du modèle OSI, ainsi que la fonction dite "anti-rejeu", c'est-à-dire la fonction destinée à bloquer des attaques parasites de connexion consistant à faire croire qu'un usager est toujours actif et à récupérer sa connexion à un moment choisi, par exemple lors d'une déconnexion intempestive.

Compte tenu de la multitude des possibilités offertes par les outils connus de l'homme du métier pour assurer une protection cryptographique, l'invention sera décrite ci-dessous au moyen d'un unique exemple particulier, non limitatif.

Le secret, protégé par SSL/TLS, est transmis du portail PORT vers le terminal T_SOUR dans la fenêtre d'authentification en réponse à une authentification réussie de ce terminal T_SOUR. Dans la fenêtre d'authentification est également transmis un compteur qui est initialisé à la fois du côté du terminal T_SOUR, et du côté du portail captif PORT, ce secret et ce compteur permettant à la fois d'éviter les attaques d'usurpation d'identité et les attaques par re-jeu.

Un algorithme cryptographique de type fonction de hachage à clef (tel que HMAC-MD5 ou HMAC-SHA1) prend en entrée des informations telles que le compteur, l'adresse IP du terminal T_SOUR qui sont connues du portail captif, ainsi que le secret partagé (utilisé en tant que clef de la fonction de hachage à clef). I1 en résulte une chaîne de longueur fixe qui permet d'assurer à la fois l'authentification de l'utilisateur (grâce au secret partagé), l'anti-rejeu (grâce au compteur) et l'authentification de la machine (grâce à l'adresse IP).

Le paquet est envoyé de l'entité PA1 du terminal T_SOUR vers l'entité PA2 du pare-feu PF grâce au protocole de niveau 2 utilisé par l'invention, puis est analysé par le portail captif PORT qui vérifie le secret et le compteur.

Si la vérification se conclut par un succès, alors le compteur est incrémenté.

Dans le cas contraire, le système de contrôle d'accès du portail PORT considère qu'il y a usurpation d'identité et choisit, en fonction de la politique de sécurité, la décision la plus appropriée à la situation, telle que celle qui consiste à fermer la connexion en envoyant une instruction au module de filtrage FILT, ou à ignorer le paquet et à continuer d'attendre la réception d'un paquet valide (la connexion étant alors fermée si aucun paquet valide n'est reçu avant l'expiration d'un délai correspondant à la durée de validité d'une authentification).

L'invention s'insère au niveau de la 7ème étape du processus standard de connexion tel que rappelé précédemment, à savoir celle dans laquelle le portail captif pousse périodiquement une fenêtre d'authentification à l'usager pour maintenir la session entre cet usager et le portail captif grâce à l'échange d'un jeton d'authentification.

L'invention conserve cette procédure de maintien de session, mais utilise une voie différente pour l'échange de l'information d'authentification entre l'usager et le portail captif.

En pratique, la fenêtre de maintien de session comprend un logiciel d'application PA1 mettant en oeuvre un protocole d'authentification associé à un programme qui affiche un bouton de déconnexion permettant à l'usager du terminal source T_SOUR de se déconnecter proprement.

Cette technique repose sur un développement en mode client serveur au niveau 2.

Le recours au langage Java pour la réalisation du logiciel du côté du terminal source est avantageux, bien que non obligatoire.

Les étapes ultérieures du processus de connexion suivant l'invention sont les suivantes.

8. Le logiciel d'application exécuté sur le terminal T_SOUR envoie périodiquement des paquets sur le segment Ethernet vers le pare-feu PF, indiquant ainsi que ce terminal est toujours actif; si un attaquant présente des jetons d'authentification invalides, ceux-ci seront détectés par les procédés cryptographiques utilisés. La stratégie de sécurité peut facilement être adaptée à ce type d'événement. Il est alors possible, par exemple, de déconnecter l'usager et de déclencher une alarme auprès des administrateurs du portail captif. I1 est également possible de ne pas considérer le jeton usurpé, de continuer d'attendre un paquet valide jusqu'à la fin d'un délai prédéterminé alloué à la connexion, et de déclencher une alarme auprès des administrateurs du portail captif.

9. Les informations contenues dans les paquets envoyés par le terminal source T_SOUR sont écoutées par un logiciel d'application PA2 présent sur le pare-feu PF. Ce dernier est capable, grâce aux informations contenues dans les paquets envoyés, de déterminer que l'usager du terminal T_SOUR est bien légitime, et que ce terminal est toujours connecté;

10. Deux cas sont possibles pour la déconnexion du terminal source T_SOUR:
a. Si l'usager se déconnecte brutalement du réseau, c'est-à-dire sans utiliser le bouton de déconnexion de la fenêtre de maintien de session, il ferme du même coup cette fenêtre de maintien de session, de sorte que le logiciel d'application PA1 cessera d'être exécuté. En conséquence, le portail captif PORT n'autorisera plus la connexion du terminal T_SOUR que pendant un temps de session résiduel préalablement fixé. Le système de contrôle d'accès du portail PORT considèrera alors que l'usager n'est plus présent sur le réseau et n'est plus autorisé à communiquer à travers le pare-feu PF. Le portail captif mettra donc à jour les règles de filtrage du pare-feu PF pour interdire la connexion du terminal T_SOUR.
b. Si l'usager se déconnecte proprement du réseau, le système de contrôle d'accès du portail PORT sera informé que cet usager souhaite se déconnecter. Pour ce faire, l'usager informera le système de contrôle d'accès du portail PORT de son souhait de quitter le réseau en utilisant le bouton de déconnexion de la fenêtre de maintien de session. Le système de contrôle d'accès du portail PORT considèrera alors que l'usager n'est plus présent sur le réseau et n'est plus autorisé à communiquer à travers le pare-feu PF. Le portail captif mettra donc à jour les règles de filtrage du pare-feu PF pour interdire la connexion du terminal T_SOUR.

Dans la mesure où la communication entre le terminal T_SOUR et le portail captif PORT doit être réalisée au moyen d'un protocole de niveau 2, il est possible d'utiliser des protocoles déjà existants tels que ARP pour encapsuler les données utiles dans des zones spécifiques du protocole. Le seul impératif à respecter est de faire en sorte que la partie serveur soit capable de comprendre le protocole spécifié du côté de l'usager. Cependant, il est aussi possible de spécifier un protocole à base Ethernet, l'important étant de spécifier un protocole au niveau 2.

Le protocole utilisé par le logiciel d'application de maintien de session se situant au niveau 2 de la couche OSI, il ne traverse pas les équipements de niveau 3, c'est-à-dire typiquement les routeurs. Il peut donc être nécessaire de spécifier également un protocole d'encapsulation et de transport bi-directionnel des trames de couche 2 de l'usager de et/ou vers le pare-feu distant.

Cette contrainte s'applique dans le cadre d'architectures centralisées entre plusieurs "hot spots" répartis dans des lieux géographiques distincts, qui sont alors tous reliés entre eux sur un site central où sera situé un portail captif central.

Néanmoins, une autre solution consiste à déployer des portails captifs sur chaque "hot spot" distant, et à ne plus réaliser de contrôle d'accès sur un site central.

Par ailleurs, dans la mesure où l'invention impose la présence d'un logiciel d'application (PA1, figure 2) à exécuter sur le terminal source, il peut être judicieux de faire en sorte :
- que ce logiciel soit téléchargé de manière transparente depuis le portail captif à la suite de l'authentification réussie du terminal source auprès de ce portail; ceci peut être réalisé par l'intermédiaire de la fenêtre de maintien de session qui transporte le jeton d'authentification dans le procédé actuel;
- que ce logiciel soit exécuté en local sur le terminal source de manière transparente pour l'usager; et
- que ce logiciel soit désactivé à la fin de la session par la fermeture de la fenêtre de maintien de session.

L'invention offre l'avantage supplémentaire de permettre de faire transiter des informations autres que des données d'authentification. Par exemple, il est possible de profiter du canal de communication ouvert en couche 2 et non susceptible d'être bloqué pour faire passer des informations de facturation de l'opérateur du portail captif vers l'usager (volume de données échangées, temps consommé, temps restant, etc...), ce type d'information pouvant être affiché dans la fenêtre de maintien de session sous la forme d'un tableau de bord.

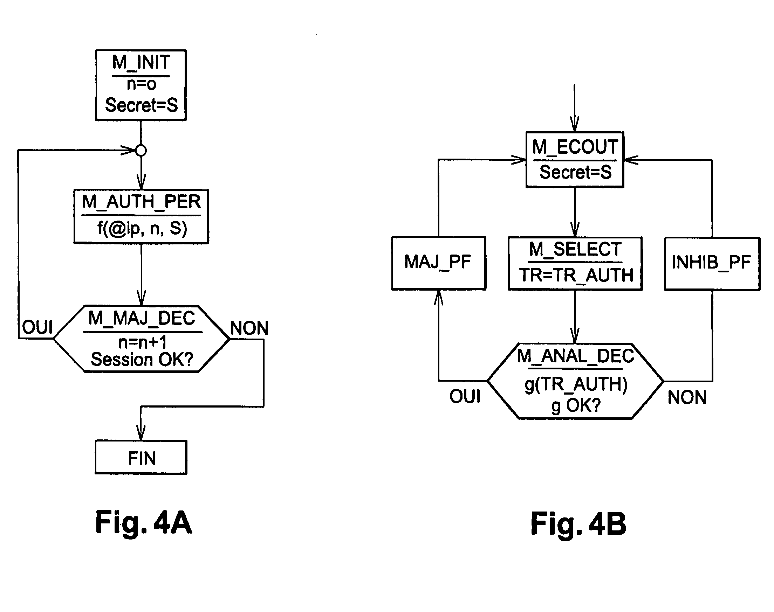

Les programmes d'ordinateur mis en oeuvre sur le terminal source T_SOUR et sur le pare-feu PF sont respectivement illustrés, de manière fonctionnelle et schématique, aux figures 4A et 4B.

Le programme illustré à la figure 4A, qui est implanté sur le terminal source T_SOUR, est conçu pour autoriser conditionnellement une connexion de ce terminal source en mode tunnel bloquant avec le terminal de destination T_DEST du réseau à travers le pare-feu PF.

Ce programme est essentiellement constitué d'un module d'initialisation M_INIT, d'un module de confirmation périodique d'authentification M_AUTH_PER, et d'un module de mise à jour et de décision M_MAJ_DEC.

Le module d'initialisation M_INIT a pour fonction de démarrer le processus d'authentification.

Pour ce faire, ce module M_INIT, qui est activé après l'authentification initiale du terminal source T_SOUR auprès du portail captif PORT, permet à ce terminal source de récupérer le secret partagé S communiqué par le portail PORT, et d'initialiser un compteur n.

Le module de confirmation périodique d'authentification M_AUTH_PER, qui est appelé par le module d'initialisation M_INIT, est propre à élaborer un authentifiant unique et à émettre cet authentifiant sur la couche 2 du modèle OSI, à destination du pare-feu PF.

Comme le suggère symboliquement la figure 4A, l'authentifiant émis est par exemple élaboré comme une fonction f de l'adresse IP du terminal source, du contenu du compteur n, et du secret partagé S.

Le module de mise à jour et de décision M_MAJ_DEC, qui est appelé par lé module de confirmation périodique d'authentification M_AUTH_PER, remplit essentiellement deux fonctions.

Tout d'abord ce module incrémente le compteur n en vue de la prochaine authentification du terminal source.

Et d'autre part, le module M_MAJ_DEC surveille la communication avec le pare-feu, de manière à mettre fin à la connexion en cas d'anomalie, et notamment en cas de silence prolongé de la part du pare-feu.

En l'absence d'anomalie, le M_MAJ_DEC appelle à nouveau le module de confirmation périodique d'authentification M_AUTH_PER pour permettre à ce dernier de procéder à une nouvelle authentification du terminal source T_SOUR auprès du pare-feu PF pendant la connexion en mode tunnel bloquant.

Le programme illustré à la figure 4B, qui est implanté sur le pare-feu PF, est conçu pour autoriser conditionnellement une connexion en mode tunnel bloquant entre le terminal source T_SOUR et la terminal de destination T_DEST du réseau à travers ce pare-feu PF.

Ce second programme comprend essentiellement un module d'écoute M_ECOUT, un module de sélection M_SELECT, et un module d'analyse et de décision M_ANAL_DEC.

Le module d'écoute M_ECOUT est en permanence à l'écoute du réseau.

Le module de sélection M_SELECT, qui est appelé par le module d'écoute M_ECOUT, est propre à repérer, dans le flux de trames circulant sur la couche 2 du modèle OSI, les trames TR qui constituent les trames d'authentification TR_AUTH du terminal source T_SOUR, et à aiguiller ces trames d'authentification TR_AUTH vers le module d'analyse et de décision M_ANAL_DEC.

Le module d'analyse et de décision M_ANAL_DEC a quant à lui pour fonction de vérifier le contenu des trames d'authentification TR_AUTH reçues du terminal source, c'est-à-dire d'élaborer une fonction de décision g sur la base de ces trames TR_AUTH.

Si les données contenues dans les trames TR_AUTH ne sont pas reconnues comme acceptables, le module d'analyse et de décision M_ANAL_DEC déclenche une opération INHIB_PF correspondant à la destruction, sur le pare-feu PF, des règles d'accès du terminal source T_SOUR.

Si au contraire les données contenues dans les trames TR_AUTH sont correctes, le module d'analyse et de décision M_ANAL_DEC déclenche une opération MAJ_PF correspondant à la création ou à la mise à jour, sur le pare-feu PF, des règles d'accès du terminal source T_SOUR.

## Revendications

1. Procédé de contrôle d'accès d'un terminal source (T_SOUR) à un réseau comportant un point d'accès (P_ACC) pour ce terminal, un pare-feu (PF) relié au point d'accès (P_ACC), et un portail (PORT) d'authentification servi par une base (BDD) de données d'authentification, ce portail (PORT) plaçant le pare-feu (PF) dans un état d'autorisation d'accès en réponse à une requête initiale d'accès en mode de base émanant du terminal source (T_SOUR) et incluant la fourniture au portail (PORT) ou au pare-feu (PF) de données d'authentification valides, à défaut desquelles le pare-feu est placé dans un état d'interdiction d'accès, le pare-feu (PF) restant dans un état d'autorisation d'accès en mode de base en réponse à la fourniture périodique, par le terminal source (T_SOUR) et sur un canal sécurisé d'échange de jeton, d'un jeton d'authentification valide à défaut duquel le pare-feu (PF) est placé dans son état d'interdiction d'accès, et le terminal source (T_SOUR) communiquant sélectivement en mode tunnel avec un terminal de destination (T_DEST) du réseau à travers un tunnel bloquant, **caractérisé en ce qu'**au moins la fourniture périodique du jeton d'authentification est réalisée par une transmission sur la couche de niveau 2 du modèle OSI du canal d'échange de jeton établi entre le terminal source (T_SOUR) et le pare-feu (PF), ce dont il résulte que la fourniture périodique du jeton d'authentification continue à être assurée lors d'une communication en mode tunnel bloquant.

2. Procédé de contrôle d'accès suivant la revendication 1, **caractérisé en ce qu'**il comprend, postérieurement à une opération initiale réussie d'authentification du terminal source (T_SOUR), au moins une opération d'élaboration d'un secret mise en oeuvre sur le terminal source (T_SOUR) et / ou sur le portail captif (PORT) par l'un au moins de programmes d'application respectifs (APPLI1, APPLI2), et des opérations de retransmission (D2 et D3 de la figure 2) de ce secret à des entités d'authentification correspondantes (PA1, PA2) du terminal source (T_SOUR) et du pare-feu (PF).

3. Procédé de contrôle d'accès suivant la revendication 2, **caractérisé en ce que** le secret est transmis, de façon sécurisée, du portail captif (PORT) au terminal source (T_SOUR) dans une fenêtre d'authentification.

4. Procédé de contrôle d'accès suivant la revendication 3, **caractérisé en ce que** la fenêtre d'authentification assure également la transmission, du portail captif (PORT) vers le terminal source (T_SOUR), d'un compteur initialisé à la fois du côté du terminal source (T_SOUR) et du portail captif (PORT).

5. Procédé de contrôle d'accès suivant l'une quelconque des revendications 3 et 4, **caractérisé en ce que** la fenêtre d'authentification comporte un bouton de déconnexion.

6. Procédé de contrôle d'accès suivant l'une quelconque des revendications 2 à 5, **caractérisé en ce que**, postérieurement à une opération initiale réussie d'authentification du terminal source (T_SOUR), le jeton d'authentification est périodiquement fourni par l'entité d'authentification (PA1) du terminal source (T_SOUR) à destination de l'entité d'authentification (PA2) du pare-feu (PF), qui vérifie ce jeton.

7. Procédé de contrôle d'accès suivant les revendications 4 et 6, **caractérisé en ce que**, postérieurement à une opération initiale réussie d'authentification du terminal source (T_SOUR), le compteur est périodiquement fourni par l'entité d'authentification (PA1) du terminal source (T_SOUR) à destination de l'entité d'authentification (PA2) du pare-feu (PF), qui vérifie ce compteur.

8. Procédé de contrôle d'accès suivant l'une quelconque des revendications 6 et 7, **caractérisé en ce que** l'entité d'authentification (PA2) du pare-feu (PF), après vérification de données fournies par l'entité d'authentification (PA1) du terminal source (T_SOUR), place un module de filtrage (FILT) du pare-feu dans un état d'autorisation ou d'interdiction d'accès en fonction du résultat de cette vérification.

9. Procédé de contrôle d'accès suivant l'une quelconque des revendications précédentes 2 à 8, **caractérisé en ce que** l'entité d'authentification (PA1) du terminal source (T_SOUR) est réalisée en langage Java, téléchargée lors de l'authentification initiale de ce terminal source, et exécutée dans la fenêtre de maintien de session.

10. Procédé de contrôle d'accès suivant l'une quelconque des revendications précédentes 2 à 9, **caractérisé en ce que** la transmission de niveau 2 établie entre les entités d'authentification (PA1, PA2) du terminal source (T_SOUR) et du pare-feu (PF) est développée selon une extension du protocole ARP.

11. Programme d'ordinateur destiné à être implanté sur un terminal source (T_SOUR) et conçu pour autoriser conditionnellement une connexion de ce terminal source en mode tunnel bloquant avec un terminal de destination (T_DEST) d'un réseau à travers un pare-feu (PF) contrôlé par un portail captif (PORT) du réseau, **caractérisé en ce qu'**il comprend un module d'initialisation (M_INIT) propre à récupérer un secret partagé (S) en provenance du portail (PORT) et à initialiser un compteur (n), un module de confirmation périodique d'authentification (M_AUTH_PER) appelé par le module d'initialisation (M_INIT) et propre à élaborer et à émettre à destination du pare-feu (PF), et sur la couche 2 du modèle OSI, un authentifiant unique dépendant au moins du secret partagé (S) et du contenu du compteur (n), et un module de mise à jour et de décision (M_MAJ_DEC) appelé par le module de confirmation périodique d'authentification (M_AUTH_PER) et propre à incrémenter le compteur (n), à mettre fin à la connexion en cas d'anomalie de communication avec le pare-feu, et à appeler à nouveau le module de confirmation périodique d'authentification (M_AUTH_PER) dans le cas contraire, ce dont il résulte que le terminal source (T_SOUR) continue à être authentifié par le pare-feu (PF) pendant la connexion en mode tunnel bloquant.

12. Programme d'ordinateur destiné à être implanté sur un pare-feu (PF) installé dans un réseau, et contrôlé par un portail captif (PORT) du réseau, pour autoriser conditionnellement une connexion en mode tunnel bloquant entre un terminal source (T_SOUR) et un terminal de destination (T_DEST) de ce réseau à travers le pare-feu (PF), **caractérisé en ce qu'**il comprend un module d'écoute (M_ECOUT) du réseau, un module de sélection (M_SELECT), et un module d'analyse et de décision (M_ANAL_DEC), **en ce que** le module d'écoute (M_ECOUT) du réseau est propre, en réponse à une demande d'authentification reçue du terminal source (T_SOUR), à récupérer un secret partagé (S) en provenance de ce terminal source, **en ce que** le module de sélection (M_SELECT) est appelé par le module d'écoute (M_ECOUT) et propre à repérer, dans un flux de trames circulant sur la couche 2 du modèle OSI, des trames d'authentification (TR_AUTH) du terminal source (T_SOUR), et à aiguiller les trames d'authentification (TR_AUTH) vers le module d'analyse et de décision (M_ANAL_DEC), et **en ce que** le module d'analyse et de décision (M_ANAL_DEC) vérifie le contenu des trames d'authentification (TR_AUTH), met fin à la connexion du terminal source (T_SOUR) en cas d'anomalie, et met à jour les règles d'autorisation de connexion utilisées par le pare-feu (PF) dans le cas contraire.

13. Système pour contrôler l'accès d'un terminal source à un réseau informatique, comprenant un pare-feu (PF) placé entre ledit réseau informatique et un point d'accès (P_ACC) pour ledit terminal source (T_SOUR), et un portail d'authentification (PORT) pilotant l'état dudit pare-feu (PF), dans lequel le pare-feu (PF) est apte à maintenir un canal de communication sécurisé ouvert pour le terminal source (T_SOUR) à condition que le terminal source (T_SOUR) envoie périodiquement ou sur évènement un jeton d'authentification, **caractérisé en ce que**:
- le pare-feu (PF) comprend un module de protocole d'authentification (PA2) et un module de filtrage (FILT), ledit module de protocole d'authentification (PA2) étant apte à rendre "passant" ou "bloquant" ledit module de filtrage (FILT) pour les communications entre le terminal source (T_SOUR) et le réseau informatique selon que le terminal source (T_SOUR) est authentifié ou non,
- le portail d'authentification (PORT) comprend un programme d'application (APPLI2) apte à distribuer des secrets au module de protocole d'authentification (PA2) lorsque l'authentification initiale du terminal source (T_SOUR) sur le réseau informatique a réussi,
- le terminal source (T_SOUR) comprend un module de protocole d'authentification (PA1) et un programme d'application (APPLI1), ledit programme d'application (APPLI1) étant apte à distribuer des secrets audit module de protocole d'authentification (PA1) lorsque l'authentification initiale du terminal source (T_SOUR) sur le réseau informatique a réussi,
et **en ce que** le module de protocole d'authentification (PA1) est apte à envoyer lesdits jetons d'authentification au module de protocole d'authentification (PA2) via la couche 2 du modèle OSI.

## Claims

1. Method of controlling access from a source terminal (T_SOUR) to a network comprising an access point (P_ACC) for this terminal, a firewall (PF) linked to the access point (P_ACC), and an authentication portal (PORT) served by an authentication database (BDD), this portal (PORT) placing the firewall (PF) in an access authorization state in response to an initial basic mode access request emanating from the source terminal (T_SOUR) and including the supply to the portal (PORT) or to the firewall (PF) of valid authentication data, without which the firewall is placed in an access prevention state, the firewall (PF) remaining in a basic mode access authorization state in response to the periodic supply, by the source terminal (T_SOUR) and over a secured token interchange channel, of a valid authentication token, without which the firewall (PF) is placed in its access prevention state, and the source terminal (T_SOUR) communicating selectively in tunnel mode with a destination terminal (T_DEST) of the network through a blocking tunnel, **characterized in that** at least the periodic supply of the authentication token is based on a transmission over the level 2 layer of the OSI model of the token interchange channel set up between the source terminal (T_SOUR) and the firewall (PF), the result of which is that the periodic supply of the authentication token continues to be assured in a communication in blocking tunnel mode.

2. Access control method according to Claim 1, **characterized in that** it comprises, after an initial successful operation for authenticating the source terminal (T_SOUR), at least an operation for generating a secret implemented on the source terminal (T_SOUR) and/or on the captive portal (PORT) by at least one of the respective application programs (APPLI1, APPLI2), and operations (D2 and D3 in Figure 2) for retransmitting this secret to corresponding authentication entities (PA1, PA2) of the source terminal (T_SOUR) and of the firewall (PF).

3. Access control method according to Claim 2, **characterized in that** the secret is transmitted, in a secured manner, from the captive portal (PORT) to the source terminal (T_SOUR) in an authentication window.

4. Access control method according to Claim 3, **characterized in that** the authentication window also handles the transmission, from the captive portal (PORT) to the source terminal (T_SOUR), of a counter initialized both on the source terminal (T_SOUR) side and on the captive portal (PORT) side.

5. Access control method according to either of Claims 3 and 4, **characterized in that** the authentication window comprises a disconnect button.

6. Access control method according to any one of Claims 2 to 5, **characterized in that**, after an initial successful operation for authenticating the source terminal (T_SOUR), the authentication token is periodically supplied by the authentication entity (PA1) of the source terminal (T_SOUR) to the authentication entity (PA2) of the firewall (PF), which checks this token.

7. Access control method according to Claims 4 and 6, **characterized in that**, after an initial successful operation for authenticating the source terminal (T_SOUR), the counter is periodically supplied by the authentication entity (PA1) of the source terminal (T_SOUR) to the authentication entity (PA2) of the firewall (PF), which checks this counter.

8. Access control method according to any one of Claims 6 and 7, **characterized in that** the authentication entity (PA2) of the firewall (PF), after checking data supplied by the authentication entity (PA1) of the source terminal (T_SOUR), places a filtering module (FILT) of the firewall in an access authorization or prevention state according to the result of this check.

9. Access control method according to any one of Claims 2 to 8, **characterized in that** the authentication entity (PA1) of the source terminal (T_SOUR) is produced in Java language, downloaded when this source terminal is initially authenticated, and executed in the session maintenance window.

10. Access control method according to any one of Claims 2 to 9, **characterized in that** the level 2 transmission set up between the authentication entities (PA1, PA2) of the source terminal (T_SOUR) and of the firewall (PF) is developed according to an extension of the ARP protocol.

11. Computer program intended to be installed on a source terminal (T_SOUR) and designed to conditionally authorize a connection of this source terminal in blocking tunnel mode with a destination terminal (T_DEST) of a network through a firewall (PF) controlled by a captive portal (PORT) of the network, **characterized in that** it comprises an initialization module (M_INIT) specifically for recovering a shared secret (S) from the portal (PORT) and initializing a counter (n), a periodic authentication confirmation module (M_AUTH_PER) invoked by the initialization module (M_INIT) and specifically for generating and sending to the firewall (PF), and over the layer 2 of the OSI model, a unique authenticator dependent on at least the shared secret (S) and the content of the counter (n), and an update and decision module (M_MAJ_DEC) invoked by the periodic authentication confirmation module (M_AUTH_PER) and specifically for incrementing the counter (n), terminating the connection in the event of a communication error with the firewall, and reinvoking the periodic authentication confirmation module (M_AUTH_PER) otherwise, the result of which is that the source terminal (T_SOUR) continues to be authenticated by the firewall (PF) during the connection in blocking tunnel mode.

12. Computer program intended to be installed on a firewall (PF) installed in a network, and controlled by a captive portal (PORT) of the network, for conditionally authorizing a connection in blocking tunnel mode between a source terminal (T_SOUR) and a destination terminal (T_DEST) of this network through the firewall (PF), **characterized in that** it comprises a module (M_ECOUT) for listening to the network, a selection module (M_SELECT), and an analysis and decision module (M_ANAL_DEC), **in that** the module (M_ECOUT) for listening to the network is specifically for recovering, in response to an authentication request received from the source terminal (T_SOUR), a shared secret (S) from this source terminal, **in that** the selection module (M_SELECT) is invoked by the listening module (M_ECOUT) and specifically for marking, in a stream of frames circulating over the layer 2 of the OSI model, authentication frames (TR_AUTH) from the source terminal (T_SOUR), and in directing the authentication frames (TR_AUTH) to the analysis and decision module (M_ANAL_DEC), and **in that** the analysis and decision module (M_ANAL_DEC) checks the content of the authentication frames (TR_AUTH), terminates the connection of the source terminal (T_SOUR) in the event of an error, and updates the connection authorization rules used by the firewall (PF) otherwise.

13. System for controlling access from a source terminal to a computer network, comprising a firewall (PF) placed between said computer network and an access point (P_ACC) for said source terminal (T_SOUR), and an authentication portal (PORT) controlling the state of said firewall (PF), in which the firewall (PF) is designed to keep a secured communication channel open for the source terminal (T_SOUR) provided that the source terminal (T_SOUR) periodically sends, or sends in response to an event, an authentication token, **characterized in that**:
- the firewall (PF) comprises an authentication protocol module (PA2) and a filtering module (FILT), said authentication protocol module (PA2) being designed to render said filtering module (FILT) "passing" or "blocking" for the communications between the source terminal (T_SOUR) and the computer network depending on whether the source terminal (T_SOUR) is authenticated or not,
- the authentication portal (PORT) comprises an application program (APPLI2) designed to distribute secrets to the authentication protocol module (PA2) when the initial authentication of the source terminal (T_SOUR) on the computer network has succeeded,
- the source terminal (T_SOUR) comprises an authentication protocol module (PA1) and an application program (APPLI1), said application program (APPLI1) being designed to distribute secrets to said authentication protocol module (PA1) when the initial authentication of the source terminal (T_SOUR) on the computer network has succeeded,
and **in that** the authentication protocol module (PA1) is designed to send said authentication tokens to the authentication protocol module (PA2) via the layer 2 of the OSI model.

## Patentansprüche

1. Verfahren zur Kontrolle des Zugriffs eines Quelle-Terminals (T_SOUR) auf ein Netz mit einem Zugriffspunkt (P_ACC) für dieses Terminal, mit einer Firewall (PF), die mit dem Zugriffspunkt (P_ACC) verbunden ist, und mit einem Authentifizierungsportal (PORT), das von einer Authentifizierungsdatenbank (BDD) bedient wird, wobei dieses Portal (PORT) die Firewall (PF) in einen Zustand der Zugriffsautorisierung versetzt als Antwort auf eine Anfangs-Zugriffsanforderung im Basismodus, die vom Quelle-Terminal (T_SOUR) stammt und die Lieferung gültiger Authentifizierungsdaten an das Portal (PORT) oder die Firewall (PF) einschließt, mangels derer die Firewall in einen Zustand der zugriffsverhinderung versetzt wird, wobei die Firewall (PF) in einem Zustand der Zugriffsautorisierung im Basismodus bleibt als Antwort auf die periodische Lieferung eines gültigen Authentifizierungstokens durch das Quelle-Terminal (T_SOUR) und auf einem gesicherten Token-Austauschkanal, mangels dessen die Firewall (PF) in ihren Zustand der Zugriffsverhinderung versetzt wird, und das Quelle-Terminal (T_SOUR) selektiv im Tunnelmodus mit einem Ziel-Terminal (T_DEST) des Netzes über einen blockierenden Tunnel kommuniziert, **dadurch gekennzeichnet, dass** zumindest die periodische Lieferung des Authentifizierungstokens durch eine Übertragung in der Schicht der Ebene 2 des OSI-Modells des Token-Austauschkanals, der zwischen dem Quelle-Terminal (T_SOUR) und der Firewall (PF) aufgebaut ist, durchgeführt wird, woraus folgt, dass die periodische Lieferung des Authentifizierungstokens bei einer Kommunikation im blockierenden Tunnelmodus weiter gewährleistet ist.

2. Zugriffskontrollverfahren nach Anspruch 1, **dadurch gekennzeichnet, dass** es nach einer gelungenen Anfangsoperation der Authentifizierung des Quelle-Terminals (T_SOUR) mindestens eine Operation der Ausarbeitung eines Geheimnisses, die im Quelle-Terminal (T_SOUR) und/oder im Captive-Portal (PORT) durch mindestens eines von Anwendungsprogrammen (APPLI1, APPLI2) durchgeführt wird, und Operationen der Rückübertragung (D2 und D3 der Figur 2) dieses Geheimnisses an entsprechende Authentifizierungseinheiten (PA1, PA2) des Quelle-Terminals (T_SOUR) und der Firewall (PF) aufweist.

3. Zugriffskontrollverfahren nach Anspruch 2, **dadurch gekennzeichnet, dass** das Geheimnis auf gesicherte Weise vom Captive-Portal (PORT) zum Quelle-Terminal (T_SOUR) in einem Authentifizierungsfenster übertragen wird.

4. Zugriffskontrollverfahren nach Anspruch 3, **dadurch gekennzeichnet, dass** das Authentifizierungsfenster ebenfalls die Übertragung eines Zählers vom Captive-Portal (PORT) zum Quelle-Terminal (T_SOUR) gewährleistet, der sowohl auf der Seite des Quelle-Terminals (T_SOUR) als auch des Captive-Portals (PORT) initialisiert wird.

5. Zugriffskontrollverfahren nach einem der Ansprüche 3 und 4, **dadurch gekennzeichnet, dass** das Authentifizierungsfenster einen Abschaltknopf aufweist.

6. Zugriffskontrollverfahren nach einem der Ansprüche 2 bis 5, **dadurch gekennzeichnet, dass** nach einer gelungenen Anfangsoperation der Authentifizierung des Quelle-Terminals (T_SOUR) das Authentifizierungstoken periodisch von der Authentifizierungseinheit (PA1) des Quelle-Terminals (T_SOUR) an die Authentifizierungseinheit (PA2) der Firewall (PF) geliefert wird, die dieses Token verifiziert.

7. Zugriffskontrollverfahren nach den Ansprüchen 4 und 6, **dadurch gekennzeichnet, dass** nach einer gelungenen Anfangsoperation der Authentifizierung des Quelle-Terminals (T_SOUR) der Zähler periodisch von der Authentifizierungseinheit (PA1) des Quelle-Terminals (T_SOUR) an die Authentifizierungseinheit (PA2) der Firewall (PF) geliefert wird, die diesen Zähler verifiziert.

8. Zugriffskontrollverfahren nach einem der Ansprüche 6 und 7, **dadurch gekennzeichnet, dass** nach der Verifizierung von Daten, die von der Authentifizierungseinheit (PA1) des Quelle-Terminals (T_SOUR) geliefert werden, die Authentifizierungseinheit (PA2) der Firewall (PF) einen Filtermodul (FILT) der Firewall in Abhängigkeit vom Ergebnis dieser Verifizierung in einen Zustand der Zugriffsautorisierung oder der Zugriffsverhinderung versetzt.

9. Zugriffskontrollverfahren nach einem der vorhergehenden Ansprüche 2 bis 8, **dadurch gekennzeichnet, dass** die Authentifizierungseinheit (PA1) des Quelle-Terminals (T_SOUR) in der Programmiersprache Java hergestellt wird, die bei der Anfangsauthentifizierung dieses Quelle-Terminals heruntergeladen und im Sitzung-Aufrechterhaltungsfenster ausgeführt wird.

10. Zugriffskontrollverfahren nach einem der vorhergehenden Ansprüche 2 bis 9, **dadurch gekennzeichnet, dass** die Übertragung der Ebene 2, die zwischen den Authentifizierungseinheiten (PA1, PA2) des Quelle-Terminals (T_SOUR) und der Firewall (PF) aufgebaut wird, gemäß einer Erweiterung des Protokolls ARP entwickelt wird.

11. Computerprogramm, das dazu bestimmt ist, in einem Quelle-Terminal (T_SOUR) installiert zu werden, und das entwickelt wurde, um bedingt eine Verbindung dieses Quelle-Terminals im blockierenden Tunnelmodus mit einem Ziel-Terminal (T_DEST) eines Netzes über eine Firewall (PF) zu autorisieren, die von einem Captive-Portal (PORT) des Netzes kontrolliert wird, **dadurch gekennzeichnet, dass** es einen Initialisierungsmodul (M_INIT), der in der Lage ist, ein vom Portal (PORT) kommendes gemeinsames Geheimnis (S) zu empfangen und einen Zähler (n) zu initialisieren, einen Modul zur periodischen Authentifizierungsbestätigung (M_AUTH_PER), der vom Initialisierungsmodul (M_INIT) angerufen wird und in der Lage ist, eine einzige Authentifizierung, die mindestens vom gemeinsamen Geheimnis (S) und vom Inhalt des Zählers (n) abhängt, auszuarbeiten und an die Firewall (PF) und an die Schicht 2 des OSI-Modells zu senden, und einen Aktualisierungs- und Entscheidungsmodul (M_MAJ_DEC) aufweist, der vom Modul der periodischen Authentifizierungsbestätigung (M_AUTH_PER) angerufen wird und in der Lage ist, den Zähler (n) zu inkrementieren, die Verbindung im Fall einer Kommunikationsanomalie mit der Firewall zu beenden, und im gegenteiligen Fall erneut den Modul der periodischen Authentifizierungsbestätigung (M_AUTH_PER) anzurufen, woraus sich ergibt, dass das Quelle-Terminal (T_SOUR) während der Verbindung im blockierenden Tunnelmodus weiter von der Firewall (PF) authentifiziert wird.

12. Computerprogramm, das dazu bestimmt ist, in einer Firewall (PF) installiert zu werden, die in einem Netz installiert ist und von einem Captive-Portal (PORT) des Netzes kontrolliert wird, um bedingt eine Verbindung im blockierenden Tunnelmodus zwischen einem Quelle-Terminal (T_SOUR) und einem Ziel-Terminal (T_DEST) dieses Netzes über die Firewall (PF) zu autorisieren, **dadurch gekennzeichnet, dass** es einen Hörmodul (M_ECOUT) des Netzes, einen Auswahlmodul (M_SELECT), und einen Analyse- und Entscheidungsmodul (M_ANAL_DEC) aufweist, dass der Hörmodul (M_ECOUT) des Netzes geeignet ist, um als Antwort auf eine Authentifizierungsanforderung, die vom Quelle-Terminal (T_SOUR) empfangen wird, ein von diesem Quelle-Terminal kommendes gemeinsames Geheimnis (S) zu empfangen, dass der Auswahlmodul (M_SELECT) vom Hörmodul (M_ECOUT) angerufen wird und geeignet ist, in einem Fluss von Rahmen, die in der Schicht 2 des OSI-Modells zirkulieren, Authentifizierungsrahmen (TR_AUTH) des Quelle-Terminal (T_SOUR) zu erfassen und die Authentifizierungsrahmen (TR_AUTH) zum Analyse- und Entscheidungsmodul (M_ANAL_DEC) zu leiten, und dass der Analyse- und Entscheidungsmodul (M_ANAL_DEC) den Inhalt der Authentifizierungsrahmen (TR_AUTH) verifiziert, die Verbindung des Quelle-Terminals (T_SOUR) im Fall einer Anomalie beendet, und im gegenteiligen Fall die von der Firewall (PF) verwendeten Verbindungs-Autorisationsregeln aktualisiert.

13. System zur Kontrolle des Zugriffs eines Quelle-Terminals auf ein Datennetz, mit einer Firewall (PF), die zwischen dem Datennetz und einem Zugriffspunkt (P_ACC) für das Quelle-Terminal (T_SOUR) angeordnet ist, und mit einem Authentifizierungsportal (PORT), das den Zustand der Firewall (PF) steuert, wobei die Firewall (PF) in der Lage ist, einen gesicherten Kommunikationskanal für das Quelle-Terminal (T_SOUR) offen zu halten, unter der Bedingung, dass das Quelle-Terminal (T_SOUR) periodisch oder bei einem Ereignis ein Authentifizierungstoken sendet, **dadurch gekennzeichnet, dass**:
- die Firewall (PF) einen Authentifizierungsprotokollmodul (PA2) und einen Filtermodul (FILT) aufweist, wobei der Authentifizierungsprotokollmodul (PA2) in der Lage ist, den Filtermodul (FILT) für die Kommunikationen zwischen dem Quelle-Terminal (T_SOUR) und dem Datennetz "leitend" oder "sperrend" zu machen, je nachdem, ob das Quelle-Terminal (T_SOUR) authentifiziert wird oder nicht,
- das Authentifizierungsportal (PORT) ein Anwendungsprogramm (APPLI2) enthält, das in der Lage ist, Geheimnisse an den Authentifizierungsprotokollmodul (PA2) auszugeben, wenn die Anfangsauthentifizierung des Quelle-Terminals (T_SOUR) im Datennetz erfolgreich war,
- das Quelle-Terminal (T_SOUR) einen Authentifizierungsprotokollmodul (PA1) und ein Anwendungsprogramm (APPLI1) aufweist, wobei das Anwendungsprogramm (APPLI1) in der Lage ist, Geheimnisse an den Authentifizierungsprotokollmodul (PA1) auszugeben, wenn die Anfangsauthentifizierung des Quelle-Terminals (T_SOUR) im Datennetz erfolgreich war,
und dass der Authentifizierungsprotokollmodul (PA1) in der Lage ist, die Authentifizierungstoken über die Schicht 2 des OSI-Modells an den Authentifizierungsprotokollmodul (PA2) zu senden.
